# EUROPEAN PATENT APPLICATION

(11) **EP 3 995 851 A1**
(43) Date of publication of application: **11.05.2022**
(21) Application number: 20914833.7
(22) Date of filing: 01.12.2020
(51) Int. Cl.: G01S 7/484

(54) **TRANSMITTING UNIT OF LASER RADAR, LASER RADAR, AND DISTANCE MEASUREMENT METHOD**

(30) Priority: 24.01.2020 CN 202010077216
(71) Applicant: Hesai Technology Co., Ltd., Shanghai 201821 (CN)
(72) Inventor: LIANG, Feng, Shanghai 201821 (CN); WANG, Rui, Shanghai 201821 (CN); XIANG, Shaoqing, Shanghai 201821 (CN)
(74) Representative: Appelt, Christian W.
(86) International application number: PCT/CN2020/133185
(87) International publication number: WO 2021/147520

(57) **Abstract**

An emitting unit (100) of a lidar (10) is provided, including a laser emitter array (101) capable of emitting detection light beams (L1, L2), and an emitting controller (102) that is coupled to the laser emitter array (101), controls the laser emitter array (101) to emit a first detection light beam (L1) in a first mode, and emit a second detection light beam (L2) in a second mode before or after emitting the first detection light beam in the first mode. The first mode includes: controlling n laser emitters (1011) in the laser emitter array (101) to emit light, where n is less than or equal to N. The second mode includes: controlling k laser emitters (1011) in the laser emitter array (101) to emit light, where the k laser emitters (1011) is selected from the n laser emitters (1011), and k is less than n. A solution that independently and alternately performs long-distance measurement and short-distance measurement of the lidar is provided. During long-distance measurement, all channels or most of channels operate to measure target objects (OB) at middle and long distances. During short-distance measurement, only a subset of channels operate, so that short-distance optical crosstalk may be greatly reduced while ensuring the resolution of the long-distance measurement.

## Description

### TECHNICAL FIELD

The present disclosure relates to the field of lidars, and in particular, to an emitting unit applicable to a lidar, a lidar having the emitting unit, and a ranging method using the lidar.

### BACKGROUND

In many existing lidar structures, optical axes of the receiving lens group and the emitting lens group usually do not coincide. These non-coaxial optical structures can cause drifts and dispersions of a received light spot when the light beam emitted by a laser emitter reaches the detector's surface located at the focal plane of a receiving lens group after that light beam is reflected by a target object. Such drifts and dispersions are dependent on the distance of the target object. The drift and dispersion of light spots have a greater impact on lidars having a high number of lines. For a lidar having a high number of lines, there may be a plurality of channels simultaneously emitting and receiving light during detection, and drift and dispersion may inevitably cause optical crosstalk between the channels that simultaneously emit light. Especially, for the measurement for a target object at a short distance, light reflected from the target object interferes with other channels that simultaneously emit and receive light. It can be seen from a point cloud that the ranges of target objects at short distances are inaccurate and channel consistency is poor.

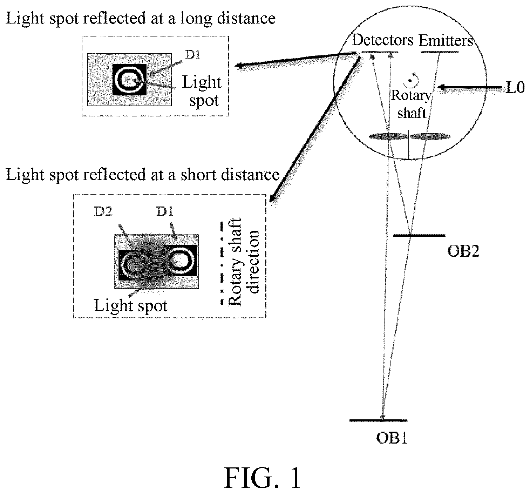

FIG. 1 shows an example of optical crosstalk between two channels of a lidar caused by drift of a light spot. A channel is formed by a laser emitter and a detector that are paired according to a field of view at a long distance. As shown in FIG. 1, for a channel A and a channel B of the lidar, when the lidar is used to detect an object at a long distance, after a detection light beam L0 emitted by the laser emitter in the channel A is reflected by a long-distance target object OB1, the lidar echo is approximated to parallel light and may irradiate a detector D1 in the channel A, as shown in the upper left part of FIG. 1, which occurs in an ideal situation. When the lidar is used to detect a target object OB2 at a short distance, after the detection light beam L0 emitted by the laser emitter in the channel A is reflected by the target object at a short distance, the lidar echo cannot be approximated to the parallel light, light spot drift and dispersion occur when the lidar echo reaches a focal plane on which the detector is located, and the lidar echo may irradiate a detector D2 in the channel B near the detector in the channel A. As shown in the lower left part of FIG. 1, such drift and dispersion of light spots may cause optical crosstalk between the lidar channels, and become more impactful as the distance decreases. Therefore, the higher number of the channels used for detecting target objects at short distances, the greater the impact on the ranging precision and accuracy of the lidar..

To prevent inaccurate ranging due to drift and dispersion of light spots when objects at long and short distances are measured by the same lidar, conventional methods use combined lidars for the long-distance measurement and the short-distance measurement. One of the lidars is dedicatedly configured to measure objects at long distances, and the other is dedicatedly configured to measure objects at short distances. In this way, although the performance of short-distance ranging measurement is improved, system costs are increased, and installation and calibration become more difficult.

The content of "Background" is merely technologies known to the inventor, and does not represent prior art in the field.

### SUMMARY

The present disclosure provides an emitting unit of a lidar, a lidar having the emitting unit, and a ranging method using the lidar.

An emitting unit of a lidar includes:
a laser emitter array, configured to emit detection light beams;
an emitting controller, coupled to the laser emitter array, configured to control the laser emitter array to emit a first detection light beam in a first mode, and configured to control the laser emitter array to emit a second detection light beam in a second mode before or after emitting the first detection light beam in the first mode, where
the first mode includes: controlling n laser emitters in the laser emitter array to emit light, n being less than or equal to N, and N being a total quantity of laser emitters in the laser emitter array; and the second mode includes: controlling k laser emitters in the laser emitter array to emit light, the k laser emitters being selected from the n laser emitters, and k being less than n.

According to an aspect of the present disclosure, the first mode is a long-distance measurement mode, and the second mode is a short-distance measurement mode.

According to an aspect of the present disclosure, the first mode includes: controlling the n laser emitters in the laser emitter array to emit light at each horizontal angle of the lidar; and the second mode includes: controlling the k laser emitters in the laser emitter array to emit light at the same horizontal angle as that in the first mode.

According to an aspect of the present disclosure, the emitting controller is configured to divide the laser emitter array into m groups to sequentially emit light, m being an integer and m>1, and the emitting controller is configured to control each group of the laser emitter array to emit the first detection light beam in the first mode, and is configured to control the each group of the laser emitter array to emit the second detection light beam in the second mode before or after emitting the first detection light beam in the first mode.

According to an aspect of the present disclosure, the k laser emitters emitting the second detection light beam at two adjacent horizontal angles of the lidar are different from each other, and the second mode circulates by taking s horizontal angles of the lidar as a period, s being an integer greater than or equal to 2.

According to an aspect of the present disclosure, the first detection light beam and the second detection light beam have different pulse codes.

According to an aspect of the present disclosure, the laser emitter array is a laser emitter array formed by a single laser emitter or linear-array laser emitters or planar-array laser emitters, and the laser emitter includes an edge-emitting laser emitter or a vertical-cavity surface-emitting laser emitter.

The present disclosure further provides a lidar, including:
the emitting unit described above;
a receiving unit, including a detector array and configured to receive echoes of the first detection light beam and the second detection light beam reflected by a target object and convert the echoes into electrical signals; and
a processing unit, coupled to the detector array and configured to read the electrical signals output by the detector array, calculate distances between the target object and the lidar according to the electrical signals, determine that the electrical signals correspond to the first detection light beam or the second detection light beam, and generate point cloud data according to the distance and the determining result.

The present disclosure further provides a ranging method using the lidar described above, including:
S201: controlling the laser emitter array to emit a first detection light beam in a first mode, where the first mode includes: controlling n laser emitters in the laser emitter array to emit light, n being less than or equal to N, and N being a total quantity of laser emitters in the laser emitter array;
S202: controlling the laser emitter array to emit a second detection light beam in a second mode before or after emitting the first detection light beam in the first mode, where the second mode includes: controlling k laser emitters in the laser emitter array to emit light, the k laser emitters being selected from the n laser emitters, and k being less than n;
S203: receiving echoes of the detection light beams reflected by a target object, converting the echoes into electrical signals, and calculating distances between the target object and the lidar according to the electrical signals;
S204: determining that the electrical signals correspond to the first detection light beam or the second detection light beam; and
S205: generating point cloud data according to the distance and the determining result.

According to an aspect of the present disclosure, the first mode is a long-distance measurement mode, and the second mode is a short-distance measurement mode.

According to an aspect of the present disclosure, the first mode includes: controlling the n laser emitters in the laser emitter array to emit light at each horizontal angle of the lidar; and the second mode includes: controlling the k laser emitters in the laser emitter array to emit light at the same horizontal angle as that in the first mode.

According to an aspect of the present disclosure, the laser emitter array is divided into m groups to sequentially emit light, m being an integer and m>1, each group of the laser emitter array is controlled to emit the first detection light beam in the first mode, and the each group of the laser emitter array is controlled to emit the second detection light beam in the second mode before or after emitting the first detection light beam in the first mode.

According to an aspect of the present disclosure, the k laser emitters emitting the second detection light beam at two adjacent horizontal angles of the lidar are different from each other, and the second mode circulates by taking s horizontal angles of the lidar as a period, s being an integer greater than or equal to 2.

According to an aspect of the present disclosure, the first detection light beam and the second detection light beam have different pulse codes.

According to an aspect of the present disclosure, step S204 includes: determining that the electrical signals correspond to the first detection light beam or the second detection light beam according to a time window in which the echoes are received.

In the embodiments of the present disclosure, long-distance measurement and short-distance measurement of the lidar are independently and alternately performed. Short-distance measurement lines are reduced, to reduce optical crosstalk caused by a large quantity of channels simultaneously emitting light when a target object at a short distance is measured by a lidar having a high number of lines. Based on the foregoing analysis, the embodiments of the present disclosure provide a solution that performs long-distance measurement and short-distance measurement of the lidar independently and alternately. During long-distance measurement, all channels (or most of channels) operate to measure target objects at middle and long distances. During short-distance measurement, only a subset of channels operate, so that a small quantity of channels simultaneously emit light each time or even a single channel emits light, thereby greatly reducing short-distance optical crosstalk or even completely avoiding optical crosstalk. In this way, the lidar has a large quantity of lines and a high angular resolution along the horizontal direction when measuring at middle and long distances, and has a small quantity of lines and a low angular resolution along the horizontal direction when measuring at short distances. However, embodiments of the present disclosure will not greatly reduce the capability to resolve a target object at a short distance, because lines and a horizontal resolution required for detection and recognition of the short-distance target object have been set to be low. Otherwise, excessive lines and an extremely high angular resolution may even generate stacked light spots at short distances, causing redundancy.

### BRIEF DESCRIPTION OF THE DRAWINGS

The drawings forming a part of the present disclosure are used to provide further understanding of the present disclosure. Exemplary embodiments and description of the present disclosure are used to explain the present disclosure, and do not constitute an inappropriate limitation to the present disclosure. In the accompanying drawings:
FIG. 1 shows a schematic diagram of drift of a light spot occurring during short-distance detection of a lidar;
FIG. 2 shows a schematic diagram of an emitting unit of a lidar according to an embodiment of the present disclosure;
FIG. 3 shows a schematic diagram of a laser emitter array according to an embodiment of the present disclosure;
FIG. 4A shows tracks scanned by each laser beam of a lidar on a target object at a long distance;
FIG. 4B shows a schematic diagram of stacking and redundancy of light spots of a lidar on a target object at a short distance;
FIG. 5 shows logic arrangement (light-emitting timing) of a plurality of laser emitters in a laser emitter array according to an embodiment of the present disclosure;
FIG. 6 shows light-emitting timing of a first mode and a second mode according to an embodiment of the present disclosure;
FIG. 7 shows light-emitting timing of a first mode and a second mode according to another embodiment of the present disclosure;
FIG. 8 shows logic arrangement (light-emitting timing) of a laser emitter array at adjacent horizontal angles according to an embodiment of the present disclosure;
FIG. 9 shows a schematic diagram of a lidar according to an embodiment of the present disclosure; and
FIG. 10 shows a schematic diagram of a ranging method using a lidar according to an embodiment of the present disclosure.

### DETAILED DESCRIPTION

Only some exemplary embodiments are briefly described below. As a person skilled in the art may understand, the described embodiments may be modified in various different ways without departing from the spirit or the scope of the present disclosure. Therefore, the accompanying drawings and the description are to be considered illustrative in nature but not restrictive.

In the description of the present disclosure, it should be understood that, orientation or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", and "counterclockwise" are orientation or position relationship shown based on the accompanying drawings, and are merely used for describing the present disclosure and simplifying the description, but are not intended to indicate or imply that the apparatus or element should have a particular orientation or be constructed and operated in a particular orientation, and therefore, should not be construed as a limitation to the present disclosure. In addition, terms "first" and "second" are used merely for the purpose of description, and shall not be construed as indicating or implying relative importance or implying a quantity of indicated technical features. Therefore, features defined by "first" and "second" may explicitly or implicitly include one or more of the features. In the description of the present disclosure, unless otherwise explicitly specified, "a plurality of" means two or more than two.

In the description of the present disclosure, it should be noted that, unless otherwise specified or defined, terms such as "install", "couple", and "connect" should be understood in a broad sense, for example, the connection may be a fixed connection, a detachable connection, or an integral connection; or the connection may be a mechanical connection, or may be an electrical connection or in communication with each other; or the connection may be a direct connection, an indirect connection through an intermediate, or internal communication between two elements or an interaction relationship between two elements. A person of ordinary skill in the art may understand specific meanings of the foregoing terms in the present disclosure according to specific situations.

In the present disclosure, unless otherwise explicitly stipulated and restricted, that a first feature is "above" or "under" a second feature may include that the first and second features are in direct contact, or may include that the first and second features are not in direct contact but in contact by using other features therebetween. In addition, that the first feature is "on", "above", or "over" the second feature includes that the first feature is right above and obliquely above the second feature, or merely indicates that a horizontal height of the first feature is higher than that of the second feature. That the first feature is "below", "under", or "beneath" the second feature includes that the first feature is right below and obliquely below the second feature, or merely indicates that a horizontal height of the first feature is lower than that of the second feature.

Many different implementations or examples are provided in the following disclosure to implement different structures of the present disclosure. To simplify the disclosure of the present disclosure, components and settings in specific examples are described below. Certainly, the components and settings are merely examples and are not intended to limit the present disclosure. In addition, in the present disclosure, reference numerals and/or reference letters may be repeated in different examples. Such repetition is intended to simplify and clarify the present disclosure, and does not indicate a relationship between various implementations and/or settings that are discussed. Moreover, the present disclosure provides examples of various specific processes and materials, but a person of ordinary skill in the art may be aware of application of another process and/or use of another material.

Exemplary embodiments of the present disclosure are described below in detail with reference to the accompanying drawings. It should be understood that the exemplary embodiments described herein are merely used to illustrate and explain the present disclosure but are not intended to limit the present disclosure.

A first aspect of the present disclosure relates to a laser emitting unit, for example, an emitting unit that can be used in a lidar. Details are described below with reference to the accompanying drawings.

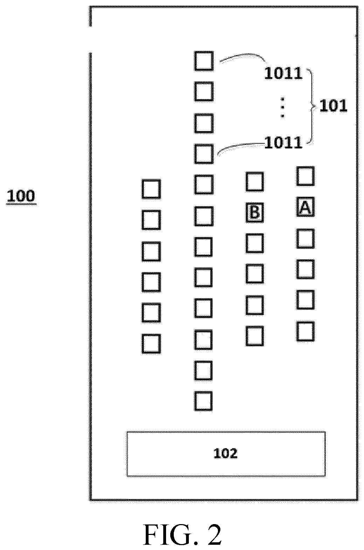

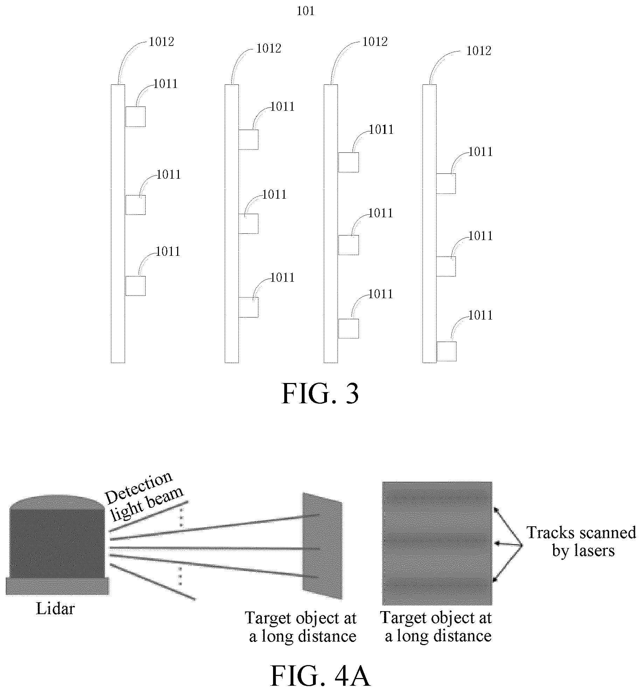

As shown in FIG. 2, an emitting unit 100 includes a laser emitter array 101 and an emitting controller 102. The laser emitter array 101 includes a plurality of laser emitters arranged on one or more substrates, and each laser emitter may be independently driven to emit light. FIG. 2 schematically shows a schematic diagram of arranging the plurality of laser emitters included in the laser emitter array 101 on a substrate (for example, a circuit board). The laser emitter array 101, for example, includes four columns of laser emitters, which add up to 30 laser emitters. A person skilled in the art may easily understand that the present disclosure is not limited thereto. The laser emitter array 101 may include a higher or lesser quantity of laser emitters, and the physical arrangement of the laser emitters may be freely set according to requirements, for example, as shown in FIG. 3, it is conceived that the plurality of laser emitters may be arranged on a plurality of substrates. According to an embodiment of the present disclosure, the emitting unit 100 further includes an emitting lens (not shown) configured to modulate (collimate) laser beams emitted by the laser emitters into parallel beams and emit the parallel beams to an environmental space around the lidar. The laser emitters in the laser emitter array 101 are preferably located at different heights of a focal plane of the emitting lens, and correspond to different vertical fields of view after being emitted from the emitting lens.

FIG. 3 shows a laser emitter array 101 according to another embodiment of the present disclosure. The laser emitter array 101 includes a plurality of substrates 1012 and laser emitters 1011 arranged on the substrates 1012. Each laser emitter 1011 is located at a different height of the focal plane of the emitting lens and respectively corresponds to a different vertical field of view of the lidar.

As shown in FIG. 2, the emitting controller 102 is coupled to the laser emitter array 101, and is configured to control the laser emitter in the laser emitter array 101 to emit light. The emitting controller 102 may include a high-voltage unit and a logic control unit. The high-voltage unit is configured to generate a high voltage required for driving the laser emitter to emit light, and the logic control unit is configured to control light-emitting timing and logic of the laser emitter array 101. Details are described below.

According to an embodiment, the lidar of the present disclosure is angularly triggered, i.e., is triggered to implement one complete ranging process at each horizontal angle of the lidar. For example, an angular resolution along the horizontal direction of the lidar is 0.2°, and the lidar is triggered to implement one complete ranging process at each horizontal angle, i.e., every 0.2° starting from 0°. For example, the lidar is triggered at 0°, 0.2°, 0.4° ..., etc. In an example with a measurement of 200 m, a rotation speed of 10 Hz, and an angular resolution along the horizontal direction of 0.2°, the flight of time of one long-distance measurement is 1.34 us, and a 0.2 degree rotation takes 55.6 us. Thus, a maximum of 41 (55.6/1.34=41.5) times of receiving and emitting light is allowed within such a time period. For lidars having a medium or high number of lines, such as 64 or 128 lines, to meet requirements of a high angular resolution along the horizontal direction and a long-distance measurement, a plurality of channels are required to simultaneously emit light. In addition, the higher the angular resolution along the horizontal direction and the longer the measurement distance, the higher the number of channels required to simultaneously emit light. The inventor of the present disclosure finds that in the lidar having a high number of lines, the channels are densely arranged, and the more the channels emitting light simultaneously are, the more likely optical crosstalk may occur. Such impact of the optical crosstalk on detecting a target object in relatively long distance may be acceptable. However, when a target object at a short distance is measured, mutual interference between channels is very severe. It can be seen from a point cloud that the ranges of target objects at short distances are inaccurate and channel consistency is poor.

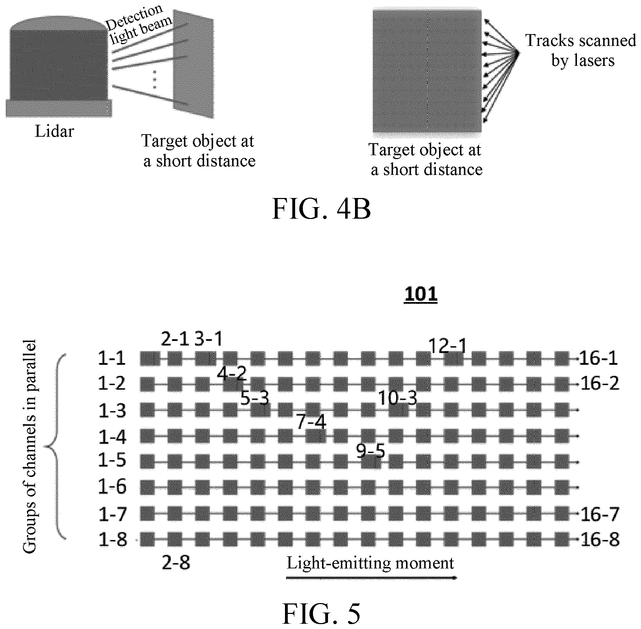

As shown in FIG. 4A and FIG. 4B, angular resolutions along a vertical and horizontal direction are redundant if all channels of the lidar having a high number of lines emit light for ranging when detecting the target object at a short distance. As shown in FIG. 4A, different laser beams of the lidar are radially emitted. Therefore, during the detection of the target object at a long distance, light spots scanning on the target object can be clearly separated due to a relatively long distance. The distance is long, laser beams reflected to a lidar are substantially parallel beams, and locations of the light spots on the focal plane are less affected by the distance. Therefore, when the object at a long distance is scanned, all channels and maximum performance of the lidar can be utilized to the greatest extent. When the target object at a short distance is detected, the laser beams are diffusely emitted at short distances, tracks scanned by the laser beam on the target object are dense, and therefore serious stacking and redundancy of light spots exist. In addition, considering drift and dispersion of short-distance light spots, both the laser beams are wasted and the measurement precision of the lidar is affected.

Therefore, according to the embodiments of the present disclosure, the emitting controller 102 may be configured to emit light in a first mode by using a higher number of laser emitters, to improve the resolution of the target object at a long distance. In addition, in a second mode, a small quantity of channels are used to measure the target object at a short distance, and the channels that simultaneously emit light during short-distance measurement are as few as possible. Preferably, a single channel is used to reduce the interference between the channels that simultaneously emit light, so that the precision of the short-distance measurement is greatly improved. Specifically, the first mode includes: controlling n laser emitters in the laser emitter array 101 to emit light, n being less than or equal to N, and N being a total quantity of the laser emitters in the laser emitter array. The second mode includes: controlling k laser emitters in the laser emitter array to emit light, the k laser emitters being selected from the n laser emitters, and k being less than n. Preferably, n is equal to the total quantity N of the laser emitters in the laser emitter array, the second mode is single-channel light emitting, the n laser emitters simultaneously emit light, and the k laser emitters also simultaneously emit light. In an embodiment of the present disclosure, for example, the total quantity of the laser emitters in the laser emitter array 101 is eight (N=8). In the first mode, the eight laser emitters in the laser emitter array 101 are controlled to emit light, and preferably, the eight laser emitters simultaneously emit light. In the second mode, two laser emitters in the laser emitter array 101 are controlled to emit light, preferably the two laser emitters simultaneously emit light, or preferably in the second mode, a single channel that is one laser emitter in the laser emitter array 101 is controlled to emit light, to further reduce channel crosstalk.

In an embodiment of the present disclosure, the first mode includes: controlling the n laser emitters in the laser emitter array to emit light at each horizontal angle of the lidar. The second mode includes: controlling the k laser emitters in the laser emitter array to emit light at the same horizontal angle as that in the first mode. For example, the angular resolution along the horizontal direction of the lidar described above is 0.2°, and the lidar is triggered at each horizontal angle, i.e., every 0.2° starting from 0°. For example, the lidar is triggered at 0°, 0.2°, 0.4° ..., etc. In other words, the laser emitter array 101 performs light-emitting ranging in the first mode and the second mode at 0°, 0.2°, 0.4° ..., and the angular resolution along the horizontal direction of the lidar may alternatively be 0.1° or other values, which may be set according to detection requirements.

The first mode and the second mode are briefly described above merely by using an example in which the laser emitter array 101 includes eight laser emitters. The lidar having a high number of lines may usually have 40, 64, 128, or more lines. The lidar having a high number of lines usually needs to be divided into several groups to sequentially emit light due to restriction of the detection distance and the angular resolution along the horizontal direction, and each group of laser emitter array is a sub-laser emitter array.

According to an exemplary embodiment of the present disclosure, the laser emitter array is divided into m groups to sequentially emit light, m being an integer and m>1. The emitting controller is configured to control each group of the laser emitter array to emit the first detection light beam in the first mode, and is configured to control the each group of the laser emitter array to emit the second detection light beam in the second mode before or after emitting the first detection light beam in the first mode. The m sub-laser emitter arrays all emit light in modes at each horizontal angle of the lidar. Preferably, sequences of the first mode and the second mode of the m sub-arrays are consistent. For example, the m sub-laser emitter arrays all perform the first mode first and then perform the second mode. That the m groups sequentially emit light refers to operating in chronological order. In other words, operation of a next group is performed after operation of a previous group is completed. Preferably, in each sub-laser emitter array, the laser emitter may simultaneously emit light in the first mode, and the laser emitter may simultaneously emit light in the second mode. According to an embodiment of the present disclosure, if a quantity m of the groups is relatively large, a quantity of laser emitters emitting light in the second mode in some sub-laser emitter arrays may be equal to 0.

Details are described below with reference to the accompanying drawings.

FIG. 5 shows logic arrangement (light-emitting timing) of a plurality of laser emitters in a laser emitter array 101. A description is made by using an example in which the laser emitter array 101 includes 128 laser emitters. Generally, for a lidar having a high number of lines, the plurality of laser emitters need to emit light in parallel when the light-emitting timing is controlled. As shown in FIG. 3, the 128 laser emitters may be divided into 16 groups, and 8 laser emitters in each group simultaneously emit light for 16 times to complete the emission of the 128 laser emitters. In FIG. 5, a horizontal direction refers to a sequence of light-emitting moments. The laser emitters are divided into 16 groups, and each group includes 8 laser emitters. For convenience, 8 laser emitters emitting light at a first moment are numbered 1-1, 1-2, ... 1-7, 1-8, 8 laser emitters emitting light at a sixteenth moment are numbered 16-1, 16-2, ... 16-7, and 16-8, and laser emitters emitting light at other moments are numbered similarly. Details are not described herein again. The 128 laser emitters are triggered at the same horizontal angle.

According to an embodiment of the present disclosure, the laser emitter array 101 is a laser emitter array formed by a single laser emitter or linear-array laser emitters, or planar-array laser emitters, and the laser emitter includes an edge-emitting laser emitter or a vertical-cavity surface-emitting laser emitter, or a combination of the edge-emitting laser emitter and the vertical-cavity surface-emitting laser emitter.

A person skilled in the art may easily understand that, in FIG. 5, the laser emitters are numbered and arranged according to a light-emitting logic sequence, and such arrangement and the physical arrangement of the laser emitters shown in FIG. 2 and FIG. 3 may be consistent, or may be inconsistent. For example, two laser emitters in the same column in FIG. 2 may be at different light-emitting moments in FIG. 5, which all fall within the protection scope of the present disclosure.

In the present disclosure, the first mode and the second mode are relative concepts. A quantity of laser emitters used in the first mode is greater than a quantity of laser emitters used in the second mode. According to an exemplary embodiment of the present disclosure, the first mode is a long-distance measurement mode in which all laser emitters in the laser emitter array 101 are used to alternately emit light for detection. The second mode is a short-distance measurement mode in which some laser emitters in the laser emitter array 101 are used to alternately emit light for detection. A person skilled in the art may easily understand that, even in the first mode, instead of using all laser emitters to alternately emit light, some laser emitters may also be used to emit light (that is, n is less than N) as long as the quantity of the laser emitters in the first mode is greater than the quantity of the laser emitters in the second mode. For convenience and clarity, a description is made below by using an example in which all laser emitters are used to emit light in the first mode.

According to the embodiments of the present disclosure, the emitting controller 102 may control the k laser emitters in the laser emitter array, so that the k laser emitters emit the second detection light beam in the second mode before or after emitting the first detection light beam in the first mode. The emitting controller 102 may preset a method to select or randomly select the k laser emitters emitting in the second mode, and the k laser emitters emit light in the second mode before or after the k laser emitters emit light in the first mode.

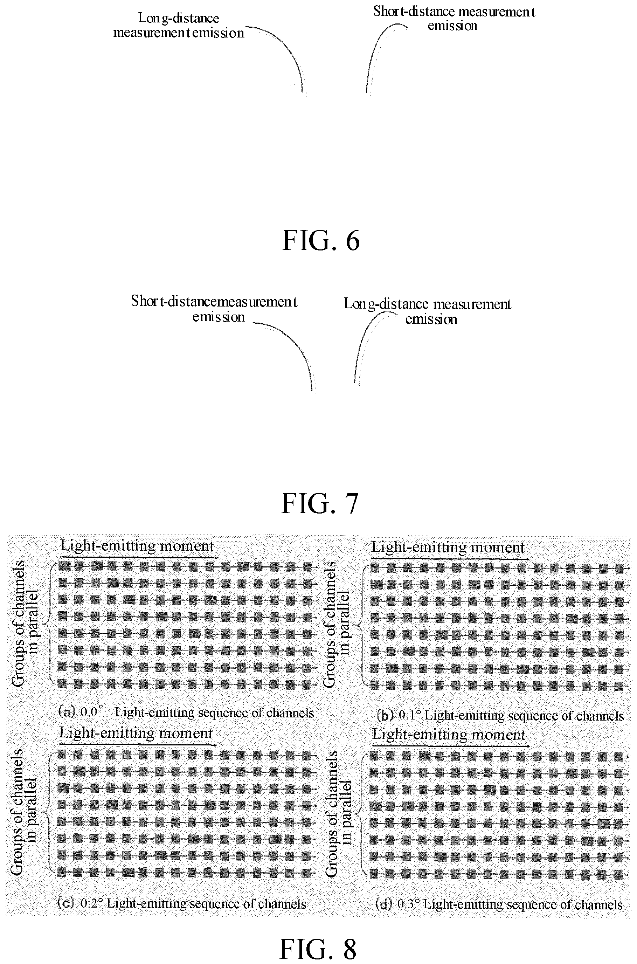

FIG. 5 shows a situation in which emission in a second mode is performed after emission in a first mode. Eight laser emitters are selected from the emitting unit including 128 laser emitters shown in FIG. 5, and are respectively numbered 1-1, 3-1, 4-2, 5-3, 7-4, 9-5, 10-3, and 12-1. During normal long-distance measurement (the first mode), the eight laser emitters append another short-distance measurement emission (the second mode) after completing long-distance measurement. FIG. 6 shows long-distance measurement emission and short-distance measurement emission of one of the laser emitters, where a green block is a time window of the long-distance measurement emission, and a yellow block is a time window of the short-distance measurement emission. Therefore, 8 times of short-distance measurement emission are added when 128 channels sequentially emit light to perform long-distance measurement. In addition, each short-distance measurement emission is preferably single-channel light emitting, that is, only one laser emitter emits light in the second mode at each time.

In addition, the present disclosure is not limited to the quantity of the selected part of laser emitters in the second mode. FIG. 5 shows 8 laser emitters for emitting the second detection light beam. The specific quantity may be greater than or less than 8, which is determined according to an expected short-distance measurement angular resolution along the horizontal direction. In addition, the part of laser emitters in the second mode may be preset, or may be generated in real time. For example, for the 8 laser emitters at each light-emitting moment in FIG. 5, one laser emitter may be randomly selected to perform emission in the second mode, which all fall within the protection scope of the present disclosure.

FIG. 5 and FIG. 6 show that for the k laser emitters, emission in the second mode is performed after emission in the first mode. Alternatively, as shown in FIG. 7, the emission in the second mode may also be performed before the emission in the first mode. The k laser emitters first emit light in the second mode to detect the target object at a short distance before emitting light in the first mode. Details are not described herein again.

In an embodiment of the present disclosure, a long-distance measurement mode (where a ranging result is used for providing three-dimensional point cloud data of lidar long-distance measurement) is that a distance between the target object and the lidar is in a range of 5 m to 200 m, and the quantity of the laser emitters emitting light in the long-distance measurement mode is large; and a short-distance measurement mode (where a ranging result is used for providing three-dimensional point cloud data of lidar short-distance measurement) is that a distance between the target object and the lidar is less than 5 m, and the quantity of the laser emitters emitting in the short-distance measurement mode is small. The present disclosure is not limited to the foregoing specific values, but may be modified and adjusted according to specific situations. For example, a distance preset value is determined according to the degree of distance-varying light spot drift and dispersion that is obtained according to lens parameters of the lidar and the capability of a system to recognize an output signal of a detector. The distance preset value is set as a reference for the lidar to output the three-dimensional point cloud data, and details are described below.

According to an exemplary embodiment of the present disclosure, to distinguish the first detection light beam emitted in the first mode and the second detection light beam emitted in the second mode, the first detection light beam and the second detection light beam may have different pulse codes. For example, both the first detection light beam and the second detection light beam may use dual pulses, but the dual pulses of the first detection light beam and the second detection light beam have different time intervals for encoding, so that according to an interval of echo pulses, whether the echo pulses correspond to the first detection light beam or the second detection light beam can be distinguished. In addition, the first detection light beam and the second detection light beam may also be distinguished according to signals read in different time windows reserved by the detectors corresponding to each channel. For example, for a situation that the second mode is performed after the first mode, the first detection light beam in the first mode is configured to perform long-distance measurement, and a first time window reserved by the detector for a long time (since the laser emitter in the channel emits light in the first mode) is configured to receive echoes of the first detection light beams reflected from the target object. After the long-distance measurement is completed in the first mode, a second time window reserved for a short time is configured to receive echoes of the second detection light beams in the short-distance measurement performed in the second mode. Therefore, the first detection light beam and the second detection light beam are distinguished according to signals read at the first time window and the second time window of each detector The lidar generally includes a rotary shaft and may rotate around the rotary shaft in a plane. For convenience, a position at which the lidar is vertically installed is illustrated. In other words, the rotary shaft is installed in a vertical direction and the lidar may rotate in a horizontal plane. The laser emitters are driven to emit detection light beams during the rotation. The lidar has a specific angular resolution such as 0.1° or 0.2°, and the detection light beams are emitted at each horizontal angle of the lidar (for example, the angular resolution along the horizontal direction of the lidar is used as an interval). FIG. 8 shows that the angular resolution of the lidar is 0.1°, that is, the lidar performs one detection every 0.1°. According to an exemplary embodiment of the present disclosure, the first mode includes: controlling the n laser emitters in the laser emitter array to emit light at each horizontal angle of the lidar. The second mode includes: controlling some laser emitters in the laser emitter array to emit light at the same horizontal angle as that in the first mode. As shown in FIG. 8(a) to FIG. 8(d), at each horizontal angle of the lidar, in addition to performing light-emitting detection in the first mode, light-emitting detection in the second mode is also performed by using the k laser emitters. As shown in FIG. 8, 128 laser emitters are divided into 16 groups to emit light, and each group of laser emitter array (that is a sub-laser emitter array) includes 8 laser emitters. In the first mode, n laser emitters in each group of laser emitter array are controlled to emit light, and a maximum value of n is a total quantity of the laser emitters in each group of laser emitter array (sub-laser emitter array). For example, 8 laser emitters in the group are all controlled to emit light in the first mode, and then only a small quantity of laser emitters (for example, one laser emitter) in each group of laser emitter array are controlled to emit light in the second mode, and operation of a next group is performed in chronological order after operation of a previous group is completed. Taking FIG. 8(a) as an example, laser emitters in the second mode are numbered 1-1, 3-1, 4-2, 5-3, 7-4, 9-5, 10-3, and 12-1 (referring to FIG. 5), and all laser emitters in the second mode are selected from different groups, to further reduce a probability of optical crosstalk. In this embodiment, 128 laser emitters are uniformly divided, or may certainly be non-uniformly divided according to actual situations. In other words, the quantity of laser emitters in each group of laser emitter array may be different.

In addition, preferably, the part of laser emitters emitting the second detection light beam at two adjacent horizontal angles of the lidar are different from each other, and the second mode circulates by taking s horizontal angles of the lidar as a period, s being an integer greater than or equal to 2. As shown in FIG. 8(a), the part of laser emitters with an angular resolution of 0.0° are respectively numbered 1-1, 3-1, 4-2, 5-3, 7-4, 9-5, 10-3, and 12-1. As shown in FIG. 8(b), the part of laser emitters with an angular resolution of 0.1° are respectively numbered 1-2, 2-7, 3-6, 5-5, 7-2, 10-7, 13-4, and 14-6, and the part of laser emitters with angular resolutions of 0.0° and 0.1° that emit light in the second mode do not coincide. In a method for selecting laser emitters in the second mode, it is to be ensured that laser emitters at different positions of the 128 laser emitters are fully used in batches as much as possible, so that the field of view and the resolution of short-distance detection are fully ensured.

The 128-line lidar shown in FIG. 8 is used as an example, 8 channels simultaneously emit light for 16 times, and the angular resolution along the horizontal direction is 0.1°. During normal long-distance measurement, one short-distance measurement is appended after the long-distance measurement is completed in some specific channels, 8 times of short-distance measurement are added at each time that 128 channels sequentially emit light to perform long-distance measurement, and each short-distance measurement is preferably single-channel light emitting. 8 different short-distance measurement channels are selected among four resolutions of 0.1°, and receiving and emitting of 32 short-distance measurement channels are completed in a circulation of 0.4°. Therefore, the long-distance measurement of the lidar has 128 lines, and the angular resolution along the horizontal direction is 0.1°. The short-distance measurement has 32 lines, and the angular resolution along the horizontal direction is 0.4°. During the long-distance measurement and the short-distance measurement, different codes may be used to distinguish echo pulses of the long-distance measurement and the short-distance measurement, to avoid misrecognition. FIG. 8 illustrates light-emitting sequence arrangement in short-distance measurement and long-distance measurement of a 128-line lidar, where a green block is a time window of the long-distance measurement light emitting, and a yellow block is a time window of the short-distance measurement light emitting. The short-distance measurement is performed after the long-distance measurement is completed.

Alternatively, 16 times of short-distance measurement are added at each time that 128 channels sequentially emit light to perform long-distance measurement, and each short-distance measurement is preferably single-channel light emitting, 16 different short-distance measurement channels are selected among two resolutions of 0.1°, so that receiving and emitting of 32 short-distance measurement channels are completed in a circulation of 0.2°. Therefore, the long-distance measurement of the lidar has 128 lines, and the angular resolution along the horizontal direction is 0.1°. The short-distance measurement has 32 lines, and the angular resolution along the horizontal direction is 0.2°.

The second mode may not have 32 lines, but have more or fewer lines, which may be set according to actual situations.

A person skilled in the art may understand that, in the present disclosure, multi-line laser emitters are not necessarily divided into groups to sequentially emit light, but may also simultaneously emit light. For example, in one case, the laser emitter array 101 includes 128 laser emitters. In the first mode, for example, 128 laser emitters may simultaneously emit the first detection light beams through appropriate photoelectric isolation to provide long-distance measurement data, which has less impact on optical crosstalk of long-distance measurement. In addition, in the second mode, for example, a plurality of laser emitters (for example, relatively separated in a vertical field of view 8, 16, and the like, that is, less than 128 laser emitters are selected to emit the second detection light beams to perform short-distance measurement (provide short-distance measurement data). This embodiment also falls within the protection scope of the present disclosure.

Based on the foregoing analysis, the embodiments of the present disclosure provide a solution that performs long-distance measurement and short-distance measurement of the lidar independently and alternately. During long-distance measurement, all channels (or most of channels) operate to measure target objects at middle and long distances. During short-distance measurement, only a subset of channels operate, and the horizontal scanning frequency is reduced, so that a small quantity of channels simultaneously emit light each time or even a single channel emits light, thereby greatly reducing short-distance optical crosstalk or even completely avoiding optical crosstalk. In this way, the lidar has a large quantity of lines and a high angular resolution along the horizontal direction when measuring at middle and long distances, and has a small quantity of lines and a low angular resolution along the horizontal direction when measuring at short distances. However, embodiments of the present disclosure will not greatly reduce the capability to resolve a target object at a short distance, because lines and an angular resolution required for detection and recognition of the short-distance target object have been set to be low. Otherwise, excessive lines and an extremely high angular resolution along the horizontal direction may even generate stacked light spots at short distances, causing redundancy.

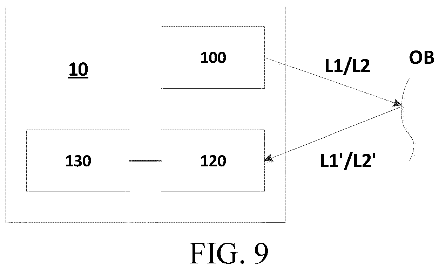

As shown in FIG. 9, a second aspect of the present disclosure relates to a lidar, and details are described below with reference to the accompanying drawings.

As shown in FIG. 9. a lidar 10 includes the emitting unit 100 described above, a receiving unit 120, and a processing unit 130. The emitting unit 100 may alternately emit a first detection light beam L1 and a second detection light beam L2 to the outside of the lidar 10 in a first mode and a second mode, and a quantity of laser emitters used in the first mode is greater than a quantity of laser emitters used in the second mode, for example, which are respectively used for long-distance measurement and short-distance measurement. The first detection light beam and the second detection light beam generate diffuse reflection on a target object OB, and light echoes L1'/L2' are returned to the lidar and are received by the receiving unit 120. The receiving unit 120 includes a detector array, for example, arrays of detectors APD, SiPM, SPAD, and the like. The detector array is configured to receive echoes of the first detection light beam and the second detection light beam reflected by the target object and convert the echoes into electrical signals. The processing unit 130 is coupled to the detector array and is configured to read the electrical signals output by the detector array, determine that the electrical signals correspond to the first detection light beam or the second detection light beam, calculate distances to the target object according to the electrical signals, and generate point cloud data according to the distance and the determining result.

A person skilled in the art may easily understand that the receiving unit 120 and the processing unit 130 may be configured as separated modules, or may be integrated into an entire module, which all fall within the protection scope of the present disclosure. In addition, to obtain a flight of time (TOF) to calculate the distance between the target object and the lidar by using a TOF ranging method, the processing unit 130 may be coupled to the emitting unit 100, so that emission moments of the first detection light beam and the second detection light beam can be recorded. Certainly, the emission moments may be obtained by using other methods, and details are not described herein again.

In the lidar according to the present disclosure, long-distance measurement and short-distance measurement of the lidar having a high number of lines are performed independently and alternately. A greatest quantity of lines and a highest angular resolution are used during the long-distance measurement, and a lesser quantity of lines and a lower angular resolution are used during the short-distance measurement, so that channels simultaneously emitting light during the short-distance measurement are reduced, thereby reducing short-distance optical crosstalk.

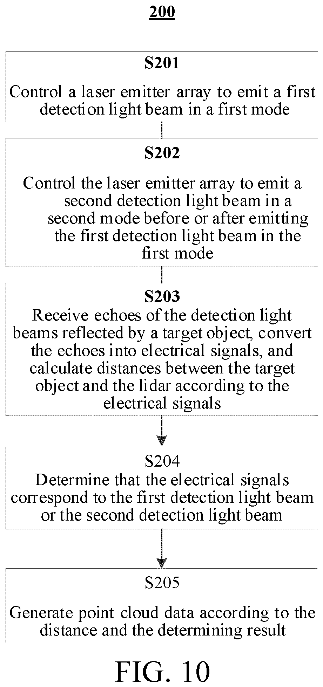

A third aspect of the present disclosure relates to a ranging method 200 using the lidar 10 described above, as shown in FIG. 10, and details are described below with reference to the accompanying drawings.

In step S201: Control the laser emitter array to emit a first detection light beam in a first mode, where the first mode includes: controlling n laser emitters in the laser emitter array to emit light, n being less than or equal to N, and N being a total quantity of laser emitters in the laser emitter array. The first mode is, for example, a long-distance measurement mode, and all laser emitters in the laser emitter array are preferably used to sequentially emit the first detection light beam.

In step S202: Control some laser emitters in the laser emitter array to emit a second detection light beam in a second mode before or after emitting the first detection light beam in the first mode, where the second mode includes: controlling k laser emitters in the laser emitter array to emit light, the k laser emitters being selected from the n laser emitters, and k being less than n. The second mode is, for example, a short-distance measurement mode which can use some laser emitters in the laser emitter array to sequentially emit the second detection light beam.

Preferably, n is equal to the total quantity N of the laser emitters in the laser emitter array, the second mode is single-channel light emitting, the n laser emitters simultaneously emit light, and the k laser emitters also simultaneously emit light.

In step S203: Receive echoes of the detection light beams reflected by a target object, convert the echoes into electrical signals, and calculate distances between the target object and the lidar according to electrical signals. For example, the distance between the target object and the lidar can be obtained according to a receiving moment of an echo and emission moment of a detection light beam by using the TOF ranging method (distance=TOF ^{∗} speed of light/2).

In step S204: Determine that the electrical signals correspond to the first detection light beam or the second detection light beam.

In step S205: Generate point cloud data according to the distance and the determining result. For example, when it is determined that the electrical signal corresponds to the first detection light beam (the long-distance measurement mode), if the distance between the target object and the lidar that is calculated according to the electrical signal is less than a preset distance (for example, 5 m), because the electrical signal is used for long-distance measurement, in this case, the electrical signal may not be used or may be discarded instead of being used for generating the point cloud data. Conversely, when it is determined that the electrical signal corresponds to the second detection light beam (the short-distance measurement mode), if the distance between the target object and the lidar that is calculated according to the electrical signal is greater than a preset distance (for example, 5 m), because the electrical signal is used for short-distance measurement, in this case, the electrical signal may not be used or may be discarded instead of being used for generating the point cloud data. More accurate three-dimensional point cloud data is obtained by splicing data in the long-distance measurement mode and the short-distance measurement mode.

According to an embodiment of the present disclosure, as shown in FIG. 5 and FIG. 6, step S202 includes: controlling the k laser emitters in the laser emitter array to emit the second detection light beam in the second mode after emitting the first detection light beam in the first mode. Alternatively, as shown in FIG. 7, step S202 includes: controlling some laser emitters in the laser emitter array to emit the second detection light beam in the second mode before emitting the first detection light beam in the first mode.

According to an embodiment of the present disclosure, the first mode includes: controlling the n laser emitters in the laser emitter array to emit light at each horizontal angle of the lidar. The second mode includes: controlling the k laser emitters in the laser emitter array to emit light at the same horizontal angle as that in the first mode. According to an embodiment of the present disclosure, the laser emitter array is divided into m groups to sequentially emit light, m being an integer and m>1, each group of the laser emitter array is controlled to emit the first detection light beam in the first mode, and the each group of the laser emitter array is controlled to emit the second detection light beam in the second mode before or after emitting the first detection light beam in the first mode.

According to an embodiment of the present disclosure, the laser emitters emitting the second detection light beam at two adjacent horizontal angles of the lidar are different from each other, and the second mode circulates by taking s horizontal angles of the lidar as a period, s being an integer greater than or equal to 2.

According to an embodiment of the present disclosure, the first detection light beam and the second detection light beam have different pulse codes. Therefore, whether the lidar echo responds to the first detection light beam or the second detection light beam may be distinguished according to different pulse codes, thereby performing corresponding processing operation.

According to an embodiment of the present disclosure, step S204 includes: determining that the electrical signals correspond to the first detection light beam or the second detection light beam according to a time window in which the echoes are received.

To distinguish the first detection light beam and the second detection light beam, the first detection light beam and the second detection light beam may have different pulse codes. For example, both the first detection light beam and the second detection light beam may use dual pulses, but the dual pulses of the first detection light beam and the second detection light beam have different time intervals for encoding, so that according to an interval of echo pulses, whether the echo pulses correspond to the first detection light beam or the second detection light beam can be distinguished. In addition, the first detection light beam and the second detection light beam may also be distinguished according to signals read in different time windows reserved by the detectors corresponding to each channel. For example, for a situation that the second mode is performed after the first mode, the first detection light beam in the first mode is configured to perform long-distance measurement, and a first time window reserved by the detector for a long time (since the laser emitter in the channel emits light in the first mode) is configured to receive echoes of the first detection light beams reflected from the target object. After the long-distance measurement is completed in the first mode, a second time window reserved for a short time is configured to receive echoes of the second detection light beams in the short-distance measurement performed in the second mode. Therefore, the first detection light beam and the second detection light beam are distinguished according to signals read at the first time window and the second time window of each detector.

Based on the foregoing analysis, the present disclosure provides a solution that performs long-distance measurement and short-distance measurement of the lidar independently and alternately. During long-distance measurement, all channels operate to measure target objects at middle and long distances. During short-distance measurement, only a subset of channels operate, and the horizontal scanning frequency is reduced, so that a small quantity of channels simultaneously emit light each time or even a single channel emits light, thereby greatly reducing short-distance optical crosstalk or even completely avoiding optical crosstalk. In this way, the lidar has a large quantity of lines and a high angular resolution along the horizontal direction when measuring at middle and long distances, and has a small quantity of lines and a low angular resolution along the horizontal direction when measuring at short distances. However, embodiments of the present disclosure will not greatly reduce the capability to resolve a target object at a short distance, because lines and a angular resolution along the horizontal direction required for detection and recognition of the short-distance target object have been set to be low. Otherwise, excessive lines and an extremely high horizontal angular resolution may even generate stacked light spots at short distances, causing redundancy.

During long-distance measurement, that all channels operate may be understood as that all laser emitters sequentially emit light during the long-distance measurement, and data obtained from time windows corresponding to the detectors of all channels is valid within a long-distance measurement distance range. During short-distance measurement, that a subset of channels operate may be understood as that the subset of laser emitters sequentially emit light during the short-distance measurement, and data obtained from time windows corresponding to the detectors of the part of channels is valid within a short-distance measurement distance range. During the long-distance measurement and the short-distance measurement, different codes may be used to distinguish echo pulses of the long-distance measurement and the short-distance measurement, to avoid misrecognition.

In the present disclosure, long-distance measurement and short-distance measurement of the lidar having a high number of lines are performed independently and alternately. A greatest quantity of lines and a highest resolution are used during the long-distance measurement, and a lesser quantity of lines and a lower resolution are used during the short-distance measurement, so that channels simultaneously emitting light during the short-distance measurement are reduced, thereby reducing short-distance optical crosstalk. For example, long-distance measurement and short-distance measurement of the lidar having a high number of lines are performed independently and alternately. A greatest quantity of lines and a highest resolution are used during the long-distance measurement, and a lesser quantity of lines and a lower resolution are used during the short-distance measurement, so that channels simultaneously emitting light during the short-distance measurement are reduced.

It may be inferred from the foregoing facts that the lidar may emit light in parallel by using a high number of channels, to improve the resolution of the target at a long distance. In addition, a lesser quantity of channels are used to measure the target object at a short distance, and the channels that simultaneously emit light during short-distance measurement are as few as possible, to reduce the interference between the channels that simultaneously emit light, so that the precision of the short-distance measurement is greatly improved.

It should be finally noted that the foregoing descriptions are merely exemplary embodiments of the present disclosure, but are not intended to limit the present disclosure. Although the present disclosure has been described in detail with reference to the foregoing embodiments, for a person skilled in the art, modifications can still be made to the technical solutions described in the foregoing embodiments, or equivalent replacements can be made to some technical features in the technical solutions. Any modification, equivalent replacement, or improvement made within the spirit and principle of the present disclosure shall fall within the protection scope of the present disclosure.

## Claims

1. An emitting unit of a lidar, comprising:
a laser emitter array, configured to emit detection light beams;
an emitting controller, coupled to the laser emitter array, configured to control the laser emitter array to emit a first detection light beam in a first mode, and configured to control the laser emitter array to emit a second detection light beam in a second mode before or after emitting the first detection light beam in the first mode, wherein
the first mode comprises: controlling n laser emitters in the laser emitter array to emit light, n being less than or equal to N, and N being a total quantity of laser emitters in the laser emitter array; and the second mode comprises: controlling k laser emitters in the laser emitter array to emit light, the k laser emitters being selected from the n laser emitters, and k being less than n.

2. The emitting unit of the lidar according to claim 1, wherein the first mode is a long-distance measurement mode, and the second mode is a short-distance measurement mode.

3. The emitting unit of the lidar according to claim 1, wherein the first mode comprises:
controlling the n laser emitters in the laser emitter array to emit light at each horizontal angle of the lidar; and the second mode comprises: controlling the k laser emitters in the laser emitter array to emit light at the same horizontal angle as that in the first mode.

4. The emitting unit of the lidar according to claim 3, wherein the emitting controller is configured to divide the laser emitter array into m groups to sequentially emit light, m being an integer and m>1, and the emitting controller is configured to control each group of the laser emitter array to emit the first detection light beam in the first mode, and is configured to control the each group of the laser emitter array to emit the second detection light beam in the second mode before or after emitting the first detection light beam in the first mode.

5. The emitting unit of the lidar according to any one of claims 1 to 3, wherein the k laser emitters emitting the second detection light beam at two adjacent horizontal angles of the lidar are different from each other, and the second mode circulates by taking s horizontal angles of the lidar as a period, s being an integer greater than or equal to 2.

6. The emitting unit of the lidar according to any one of claims 1 to 4, wherein the first detection light beam and the second detection light beam have different pulse codes.

7. The emitting unit of the lidar according to any one of claims 1 to 4, wherein the laser emitter array is a laser emitter array formed by a single laser emitter or linear-array laser emitters or planar-array laser emitters, and the laser emitter comprises an edge-emitting laser emitter or a vertical-cavity surface-emitting laser emitter.

8. A lidar, comprising:
the emitting unit according to any one of claims 1 to 7;
a receiving unit, comprising a detector array and configured to receive echoes of the first detection light beam and the second detection light beam reflected by a target object and convert the echoes into electrical signals; and
a processing unit, coupled to the detector array and configured to read the electrical signals output by the detector array, calculate distances between the target object and the lidar according to the electrical signals, determine that the electrical signals correspond to the first detection light beam or the second detection light beam, and generate point cloud data according to the distance and the determining result.

9. A ranging method using the lidar according to claim 8, comprising:
S201: controlling the laser emitter array to emit a first detection light beam in a first mode, wherein the first mode comprises: controlling n laser emitters in the laser emitter array to emit light, n being less than or equal to N, and N being a total quantity of laser emitters in the laser emitter array;
S202: controlling the laser emitter array to emit a second detection light beam in a second mode before or after emitting the first detection light beam in the first mode, wherein the second mode comprises: controlling k laser emitters in the laser emitter array to emit light, the k laser emitters being selected from the n laser emitters, and k being less than n;
S203: receiving echoes of the detection light beams reflected by a target object, converting the echoes into electrical signals, and calculating distances between the target object and the lidar according to the electrical signals;
S204: determining that the electrical signals correspond to the first detection light beam or the second detection light beam; and
S205: generating point cloud data according to the distance and the determining result.

10. The method according to claim 9, wherein the first mode is a long-distance measurement mode, and the second mode is a short-distance measurement mode.

11. The method according to claim 9, wherein the first mode comprises: controlling the n laser emitters in the laser emitter array to emit light at each horizontal angle of the lidar; and the second mode comprises: controlling the k laser emitters in the laser emitter array to emit light at the same horizontal angle as that in the first mode.

12. The method according to claim 11, wherein the laser emitter array is divided into m groups to sequentially emit light, m being an integer and m>1, each group of the laser emitter array is controlled to emit the first detection light beam in the first mode, and the each group of the laser emitter array is controlled to emit the second detection light beam in the second mode before or after emitting the first detection light beam in the first mode.

13. The method according to any one of claims 9 to 11, wherein the k laser emitters emitting the second detection light beam at two adjacent horizontal angles of the lidar are different from each other, and the second mode circulates by taking s horizontal angles of the lidar as a period, s being an integer greater than or equal to 2.

14. The method according to any one of claims 9 to 12, wherein the first detection light beam and the second detection light beam have different pulse codes.

15. The method according to any one of claims 9 to 12, wherein step S204 comprises: determining that the electrical signals correspond to the first detection light beam or the second detection light beam according to a time window in which the echoes are received.
